# EUROPEAN PATENT APPLICATION

(11) **EP 4 748 695 A1**
(43) Date of publication of application: **27.05.2026**
(21) Application number: 24215481.3
(22) Date of filing: 26.11.2024
(51) Int. Cl.: B62M 1/28

(54) **A COMPACT MECHANICAL TRANSMISSION SYSTEM THAT TRANSFORMS AN OSCILLATING MOTION INTO A ROTATION WITH A STEPLESS VARIABLE GEAR-RATIO, THE MECHANICAL TRANSMISSION SYSTEM SOLUTION**

(71) Applicant: Crosstepper Me-Mover ApS, 2900 Hellerup Zealand (DK)
(72) Inventor: Thilo, Jacob Hiob, 77110 Hua Hin (TH)
(74) Representative: Dickerson, David

(57) **Abstract**

*The Mechanical Transmission System described herein offers* a *unique solution for converting an oscillating movement to a rotating movement while providing a variable gear ratio. The system consists of* a *pushrod, a Drive-Belt attached to an axle with a variable radius, a construction fixed to the Drive-Belt, and* a *mechanism for transforming the oscillating movement to a rotating movement. The key feature of the invention lies in the combination of the pushrod and the variable radius of the axle, which increases or decreases during the oscillating movement. This unique design principle allows for* a *compact, stepless, and automated variable gearing ratio derived from the oscillating movement. The compact design and versatile applications make this Mechanical Transmission System a valuable innovation in the field of mechanical engineering, specifically Gearing for Interconverting Rotary and Oscillating Motion.*

## Description

### The details of our invention, along with its various features, are described below.

***Please note that when the term "Belt"; or "Drive-Belt" is used, it can refer to a chain, belt, thread, or any other fixture capable of transforming pulling forces.***

***Please note that when the term "Variable Gear Ratio" is used, it can refer to a decreasing or increasing gear ratio depending on the movement of the pedal arm.***

***In the following, we call this invention the mechanical transmission system with a variable gear ratio, (the "Mechanical Transmission System").***

### Technical Field

***The Mechanical Transmission System pertains to the field of mechanical engineering, more specifically to the technical field of Gearing for Interconverting Rotary and Oscillating Motion. It is suitable for use in various fields such as step-bicycles, machinery and equipment. The invention can be applied to "rehab" equipment, stationary and*/*or dynamic fitness equipment, or any other equipment where the design requires a Variable Gear Ratio generated from an oscillating movement to a rotating motion.***

### Purpose

***The purpose of the present invention is to provide an efficient, reliable, compact, and powerful Mechanical Transmission System for all applicable devices, for instance step-bicycles and other mechanical products. This Mechanical Transmission System transforms an oscillating movement into a fully rotating movement and enables the gear ratio to increase or decrease during the oscillating movement. The technical problem that is solved by the Mechanical Transmission System is*** how to build a compact transmission system for an oscillating motion to a rotating motion with a Variable Gear Ratio. ***The unique design principle of the invention optimizes the power transfer from the user to the item, providing a stepless, and automated Variable Gearing Ratio based on oscillating movements. Furthermore, the Mechanical Transmission System is designed to be as simple to build and manufacture as possible. The Mechanical Transmission System is uniquely compact, allowing for a wide range of applications within mechanical engineering.***

### Background

### Historical background

***Step-bicycles have a rich history that dates back to their origins as exercise machines in the late 19th century. Initially designed for stationary exercise, step-bicycles simulated cycling motions for low-impact aerobic workouts. With the introduction of wheels and the innovative step-through frame design, they evolved into practical transportation options and outside exercise. Step-bicycles gained popularity for their comfortable and user-friendly nature. In recent years, they have also found success in the fitness industry, especially for rehabilitation purposes. The low load or strain and accessible nature of step-bicycles make them ideal for individuals recovering from injuries or seeking physical therapy. Today, step-bicycles contribute to enhance overall health and well-being.***

### Technical Background

***Step-bicycles have been utilized for fitness and rehabilitation purposes for several years and, over time, have also become popular for personal transportation. The overall design enables a range of benefits, including moderate mileage, health benefits, ease of use, and low body tension. A step-bicycle offers a distinct advantage by engaging and exercising all major muscle groups in the body, rather than solely focusing on the legs.***

***For both rehabilitation and exercise purposes, it is essential for the step-bicycle to provide comfort and safety during rides. Furthermore, due to the pedaling mechanism employed in step-bicycles, the pedaling feels effortless and lightweight while simultaneously increasing resistance as power and speed are augmented. In other words, the design of the step-bicycle, particularly its Mechanical Transmission System, incorporates step-less gearing to optimize power transfer and enhance the overall riding experience.***

***In contrast to conventional transmission systems, the present invention introduces a novel Mechanical Transmission System that converts an oscillating movement into a fully rotating movement while providing a Variable Gear Ratio. The unique design principles of the Mechanical Transmission System allows for step-less gearing, optimizing power transfer and enhancing the overall user experience of the mechanical device in use.***

***The Mechanical Transmission System differs essentially from prior art. It belongs to the technical field of Gearing for Interconverting Rotary and Oscillating Motion. Another invention,*** US 20120061942 A1 (KULIKOV, KONSTANTIN et al.***) (the "D1"), represents the closest prior art within this field. The Mechanical Transmission system differs from D1, in that D1 does not reveal a push rod configured for activating the main Drive-Belt, nor does it include a top fix-plate to guide and optimize the Main Drive-Belt stroke.***

### Detailed description of the invention

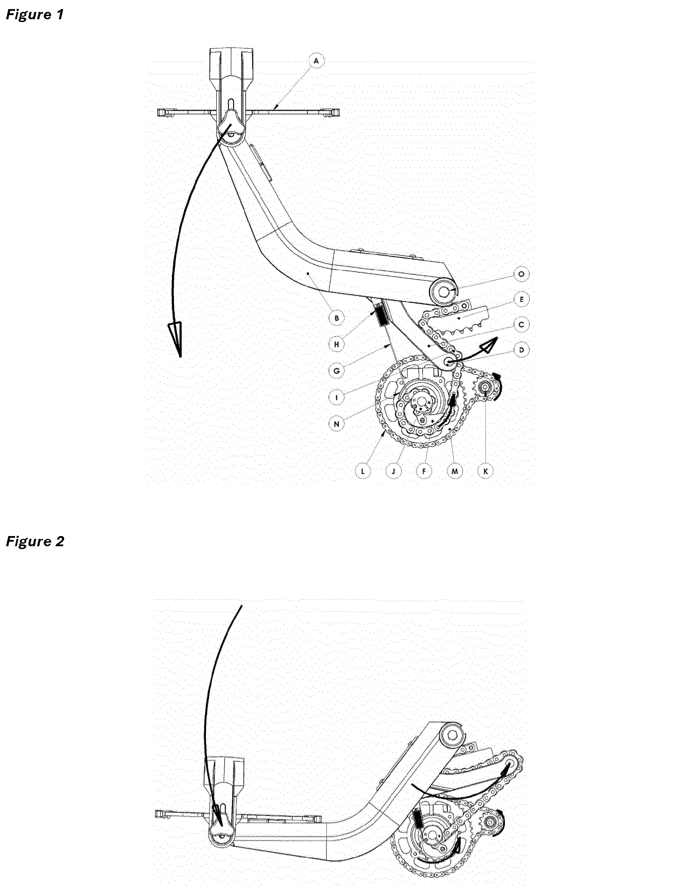

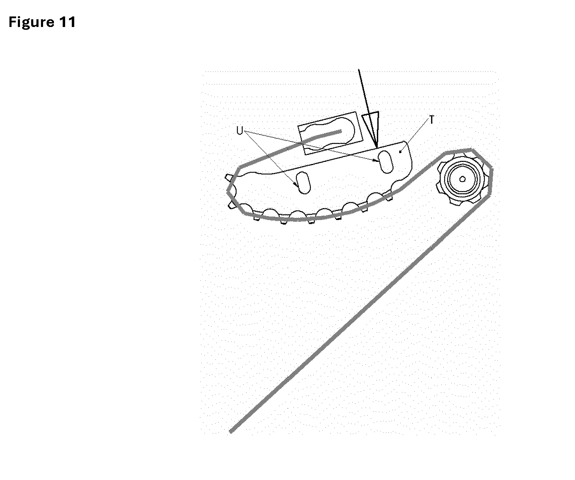

***The Mechanical Transmission System is designed to efficiently convert an oscillating movement, specifically a downwards movement of approximately 60 degrees in the pedal-arm (Figure 1B), into a rotating movement. This is achieved through a unique combination of different features. The invention consists of a Drive-Belt (******Figure 11******), that also may be a chain, attached to a variable radius gear-axle (Figure 1F) through the Drive-Belt connecting with the top-fix plate (Figure 1E) in the other end controlling the motion from the pedal arm (Figure 1B). These features facilitate the creation of a Variable Gear Ratio between the movement of the pedal-arm and the rotation of the variable radius gear-axle. The Mechanical Transmission System is driven by the movement of the pushrod, which starts its movement in such a position that the Drive-Belt is nearly in a straight line.***

***Further, the variable radius of the gear-axle increases (or decreases) during the oscillating movement of the pushrod's (Figure 1C) movement, creating a rotating movement enabling more (or less) power and stepless gearing. The key features and their functionalities are described below:***

### Feature 1: Movement of the pushrod

***A pushrod (Figure 1C) is attached underneath the pedal-arm (Figure 1B) and plays a crucial role in initiating the transmission process. As the pedal-arm (Figure 1B) moves downward, the pushrod (Figure 1C) moves backward, causing the angle of engagement between the Drive-Belt (Figure 1I) and the pushrod pulley (Figure 1D) to become more acute. This change in angle elongates the pulling length of the Drive-Belt relative to the downward or upward movement of the pedal-arm, thereby increasing or decreasing the rotation of the gear-axle.*** ***Figure 2*** ***and*** ***figure 3*** ***provide detailed illustrations of this feature.***

### Feature 2: Variable radius on the gear-axle

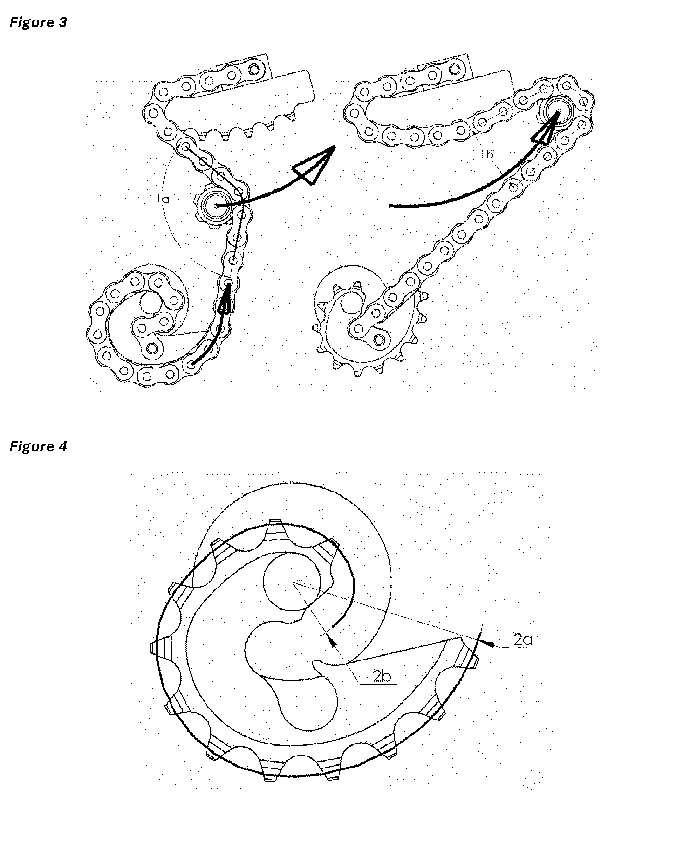

***To further enhance the gear ratio, the gear-axle (Figure 1F) is designed with a variable radius. This design element contributes to accelerate the rotation of the gear-axle in relation to the downward movement of the pedal-arm (***Figure 1B***).*** ***Figure 4*** ***illustrates this feature.***

### Feature 3: Top-Fix Plate

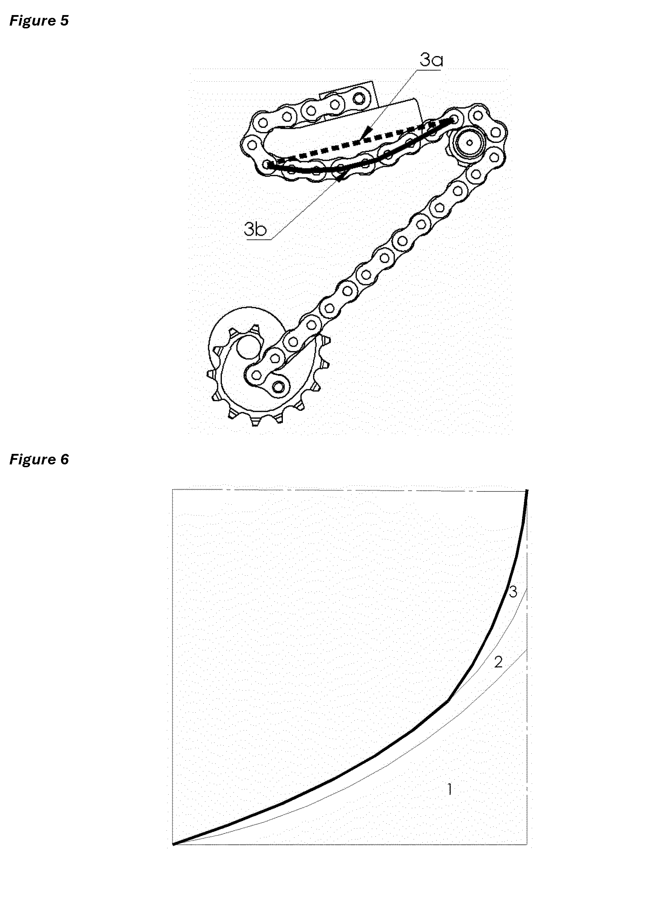

***To achieve a significant gear-ratio increase toward the lowest movement of the pedal-arm (Figure 1B), a control mechanism including a specially shaped top-fix plate (Figure 1E) is employed. This plate creates a curved path from the top-fix point to the engagement point of the Drive-Belt (Figure 1I) on the pushrod pulley (Figure 1D). The curvature of the top-fix plate (Figure 1E) plays a vital role in further augmenting and controlling the increase or decrease of the gearing ratio during the movement of the pedal-arm (Figure 1B).*** ***Figure 5*** ***provides a detailed illustration of this feature.***

***The combination of these three features constitutes the overall design principle of the Mechanical Transmission System and enables the creation of a variable gear ratio that effectively adapts to the required functionality of the Mechanical Transmission System. This is illustrated in detail through*** ***Figure 6******. Through the innovative combination of these features, the Mechanical Transmission System described herein offers improved efficiency, stepless gearing, and effective power transmission.***

***The Mechanical Transmission System comprises additional technical mechanisms supporting its functions and optimizing its performance.***

***The Mechanical Transmission System incorporates a freewheel mechanism that allows the drive belt (Figure 1L) to seamlessly engage with a rotating system, even while it's already in motion. Unlike traditional systems, there's no need to interrupt the rotation for the belt to connect. The freewheel allows the belt to spin freely until the gear-axle (Figure 1F) gradually synchronizes with the existing rotational speed. Once synchronized, the gear-axle seamlessly adds power to the rotating element, like spinning wheels, for enhanced performance.***

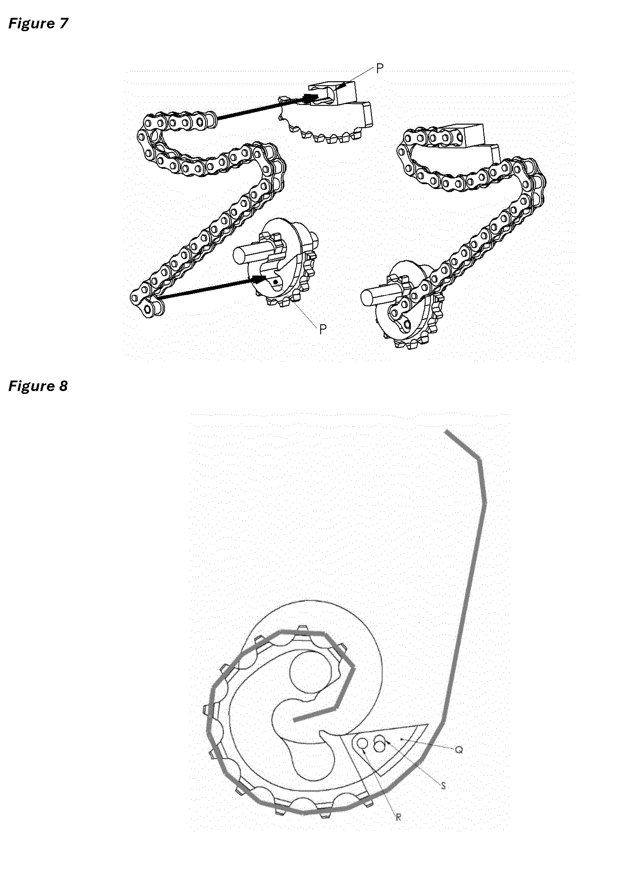

***It incorporates a screwless fixture feature (could be a Drive-Belt or a chain), which allows for a Drive-Belt to be mounted and maintained without any special tools or knowledge. The screwless plug in and plug out mechanism is illustrated in Figure 7P with a top-fix point at the top-fix plate (Figure 1E) and a lower connection point in the gear-axle (Figure 1F).***

***The Mechanical Transmission System also comprises additional design features making the mechanism adaptable and versatile.***

***The variable radius gear axle (Feature 1F) has a design feature comprising a radius adjustment, mounting hole and adjustment-slot (******Figure 8******). By changing the position of the pins*/*screws mounted, the angle of the component will be adjusted allowing changing the gear ratio curve (******Figure 6******) for the transmission system. The purpose of this could for instance be to improve the acceleration by having lighter gearing. This can be done without the use of any new components and is practical to adapt the transmission systems force for smaller or bigger devices, such as children's bikes or adult bikes.***

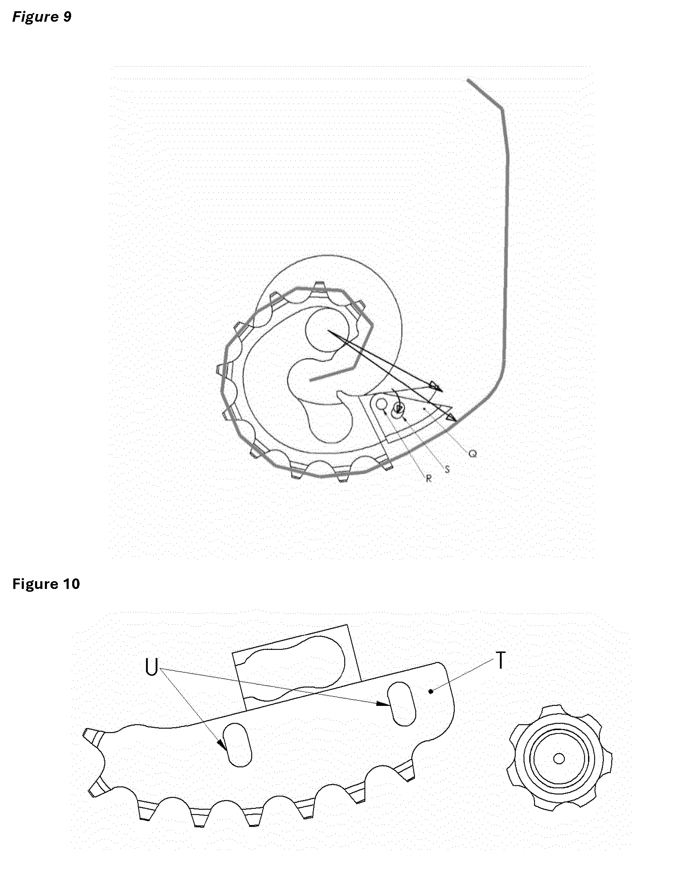

***The top-fix plate (Figure 1E) has a design feature comprising two mounting slots (Figure 10U) allowing the user repositioning the component (******Figure 11******) to further influence the angle of the gearing curve (******Figure 6******). Through its design feature this can be done without the need to change components.***

***The adjustments impact from the different components differs depending on the different phases of the movement of the pedal arm. The variable radius gear axle impacts during the first phase of the movement. After accelerating, both components support the mechanism maintaining cruising force. At top force it is primary the top-fix plate that induces a heavier or lighter gear to the Mechanical Transmission System.***

### Advantages

***The present invention has several advantages over the prior art. It provides an efficient and reliable Mechanical Transmission System that is suitable for use in step-bicycles or other applications. The automated variable gearing ratio optimizes the force of power from the user to the item, making it easier and more comfortable to operate. The Mechanical Transmission System is compact, lightweight, and requires minimal space and its simplicity makes it easy to install in a variety of settings. The design principle minimizes power loss during transmission, ensuring maximum energy transfer. Additionally, the mechanical advantages of the invention include a design that is much easier to service and easier to assemble during production, by requiring few components. It also provides the benefit of quick and simple maintenance and assembly under the Mechanical Transmissions Systems lifetime without the need of special tools. While the invention is particularly suited for step-bicycles, it has potential applications in various mechanical devices. This includes rehabilitation equipment, stationery and dynamic fitness equipment, and any feasible devices for instance machinery and equipment.***

### Way of carrying out the invention

***The operational use of the Mechanical Transmission System into a mechanical step-bicycle. The references A-O are all illustrated in*** ***Figure 1******.***

***When a user engages with the step-bicycle and applies downward force on the pedal arm (Figure 1B), the transmission system springs into action, converting the user's power into speed and movement. The process starts with the pushrod (Figure 1C), which is attached underneath the pedal-arm (Figure 1B). As the user pushes the pedal-arm (Figure 1B) downwards, the pushrod (Figure 1C) initiates the transmission process by moving backward.***

***As the pushrod (******Figure 1C******) moves backward, the Drive-Belt (Figure 1I) engages with the pushrod pulley (Figure 1D). This engagement occurs at an angle (******Figure 3*** ***1a) that becomes increasingly acute as the pushrod moves backward (******Figure 3*** ***1b). This change in angle elongates the effective pulling length of the Drive-Belt (Figure 1I) relative to the downward movement of the pedal-arm (Figure 1B).***

***The increased pulling length of the Drive-Belt translates into more rotation of the gear-axle (Figure 1F). Additionally, the gear-axle (Figure 1F) incorporates a unique design feature - a variable radius (******Figure 4******). As the pedal-arm (Figure 1B) moves downward and the pushrod (Figure 1C) engages with the Drive-Belt (Figure 1I) and gear-axle (Figure 1F), this declining (or increasing) radius feature causes the gear-axle (Figure 1F) to rotate at an increasing (or decreasing) speed compared to the downward (or upward) movement of the pedal-arm (Figure 1B). This amplifies the power output and results in an increase (or decrease) in speed and movement of the step-bicycle.***

***To optimize the gear ratio during the final phase of the pedal-arm (Figure 1B) movement, a specially shaped top-fix plate (Figure 1E) comes into play. This plate creates a curved path from the top-fix point to the engagement point of the Drive-Belt (Figure 1I) on the pushrod pulley***

***(Figure 1D). This is illustrated in*** ***Figure 5*** ***(3a and 3b). The curvature of the top-fix plate contributes to further amplifying the gear ratio, controlling the motion by ensuring smooth power transfer and efficient utilization of the user's downward force. The feature functions as a control mechanism ensuring a seamless transition as the pedal-arm reaches its lowest point, maintaining the momentum and speed of the step-bicycle.*** ***Figure 6*** ***illustrates the contribution of the three different features to the final gear ratio curve.***

***Lastly, the Mechanical Transmission system also comprises design features enabling the user to adjust the gear-ratio to fine-tune the power transfer and resistance depending on the specific needs of the application and user. By adjusting the radius of the variable radius gear-axle through its adjustable mounting screws (******Figure 8******), the fixture can be rotated outwards or inwards resulting in a new radius and thereby a new gear-ratio curve (******Figure 9******). Also, the top-fix plate may further refine the gear-ratio by adjusting it through its mounting slots (******Figure 10*** ***and*** ***Figure 11******). This ensures that the system can be tailored to optimize performance during different phases of operation, such as acceleration or cruising. Through this practical operation of the Mechanical Transmission System, the user's power is effectively harnessed, transformed, and transmitted to create speed and movement. The Mechanical Transmission System optimizes power utilization, providing a smooth and dynamic riding experience for the user when applied in a step-bicycle. It allows for efficient conversion of the user's physical exertion into forward motion, making the step-bicycle an ideal choice for exercise and movement.***

### Drawings Description

***Figure 1*** ***provides an overview of the Mechanical Transmission System's components as viewed from the side with the pedal-arm in its top position. The components are labeled as follows:***
   ***A. Pedal***
   ***B. Pedal-arm***
   ***C. Pushrod***
   ***D. Pushrod pulley***
   ***E. Top-fix plate***
   ***F. Gear-axle***
   ***G. Return-belt***
   ***H. Return spring***
   ***I. Drive-Belt***
   ***J. Return disk***
   ***K. Wheel-axle***
   ***L. Wheel-axle drive belt***
   ***M. Large sprocket***
   ***N. Free-wheel***
   ***O. Pedal arm pivot point***
   P. Screwless fixture
   Q. Radius-adjustment
   R. Mounting hole
   S. Adjustment-slot
   T. Adjustable top-fix plate
   U. Mounting-slot
***Figure 2*** ***is related to Feature 1 of the solution. It shows the transmission system with the pedal-arm (Figure 1B) in its bottom position and is used in conjunction with*** ***Figures 3*** ***to explain Feature 1. It illustrates the backward movement of the pushrod (Figure 1C), which changes the angle of the Drive-Belt (Figure 1I) around the pushrod pulley (Figure 1D).***
***Figure 3*** ***illustrates Feature 1 of the solution and should be seen in relation to*** ***Figure 2******. It illustrates the initial angle (1a) at the start of the downward movement of the pedal-arm (Figure 1B) and the angle in its end position (1b).***
***Figure 4*** ***relates to Feature 2 of the solution. It illustrates the variable radius on the gear axle (Figure 1F). 2a represents the radius at the beginning of the downward movement of the pedal-arm (Figure 1B), while 2b represents the radius at the end of the movement.***
***Figure 5*** ***illustrates Feature 3, highlighting the impact of the top-fix plate (Figure 1E) which is responsible for the 3^{rd} part of the gear ratio curve (******Figure 6******) by controlling how much of the***
   ***Drive-Belt can be used during one full pedal-arm stroke.***
***Figure 6*** ***combines the three main features of the transmission system (Feature 1, Feature 2, and Feature 3). The X-axis illustrates the downward movement of the pedal-arm (Figure 1B), starting at the top position (as seen in*** ***Figure 1******) and moving towards the bottom position (******Figure 2******). The total movement of the pedal-arm (Figure 1B) is approximately 60 degrees. The Y-axis in*** ***Figure 3*** ***illustrates the corresponding variable rotation of the gear-axle (Figure 1F), which completes approximately one full rotation, 360 degrees, for a full stroke of the pedal-arm (Figure 1B). The three distinct areas under the curve: 1, 2, and 3 represent the individual contributions of the three different features to the final combined gear ratio curve. It illustrates the interplay and the resulting Variable Gear Ratio curve achieved by the Mechanical Transmission system.***
***Figure 7*** ***illustrates the impact of using a roller-chain or leaf-chain as the Drive-Belt, which may be any fixture feature instead of a chain or a belt. The chain fitted in the gear-axle (Figure 1F) and the top-fix plate (Figure 1E) through a special screwless fixture-feature (Figure 7P).***
***Figure 8*** ***provides a decomposed view of the variable radius gear-axle in Figure 1F. The components are labeled as follows:***
   ***Q. Radius-adjustment***
   ***R. Mounting hole***
   ***S. Adjustment-slot***
***Figure 9*** ***illustrates that the variable radius gear-axle has an adjustable feature. By loosening two mounting-screws mounted in the mounting hole (Figure 9R) holding the radius adjustment (Figure 9Q), the radius adjustment can be rotated outwards or inwards using the adjustment slot (Figure 9S). This will increase or decrease the resulting radius and thereby adjust the gear-ratio curve.***
***Figure 10*** ***provides a decomposed view of the adjustable top-fix plate in (******Figure 10*** ***and 11T). The components are labeled as follows:***
   ***T. Adjustable top-fix plate***
   ***U. Mounting-slots***
***Figure 11*** ***illustrates that the top-fix plate has an adjustable feature. The adjustable top-fix plate (******Figure 10*** ***and 11T) is mounted in two mounting slots (******Figure 10*** ***and 11U) and by loosening the mounting screws the adjustable top fix-plate (******Figure 10*** ***and 11T) can be moved up and down and thereby adjusting the gear ratio.***

### Declaration of Right to the Invention (The Mechanical Transmission System)

Declaration of Right to the Invention for Crosstepper Me-Mover ApS, the entity that has invented the Mechanical Transmission System and is asserting the right to the invention.

## Claims

1. • ***A compact Mechanical Transmission System that transforms an oscillating motion into a rotation with a stepless variable gear-ratio, the Mechanical Transmission System solution comprises:***
∘ ***A pushrod (Figure 1C) connected at a first end to a pushrod pulley (Figure 1D), and at a second end connected to a pedal-arm (Figure 1B) at a point between a first and a second end of the pedal arm (Figure 1B),***
∘ ***a pedal-arm pivot (Figure 1O) point is rotatably connected to the pedal-arm (Figure 1B) at a first end,***
∘ ***a curved top-fix plate (Figure 1E) is fixedly connected by the pedal-arm pivot point (Figure 1O),***
∘ ***a Main Drive-Belt, having a first and a second end, where the Main Drive Belt (Figure 1I) at the first end, is fixedly connected to the top-fix plate (Figure 1E) near the pedal-arm pivot point (Figure 1O),***
∘ ***a variable radius gear axle (Figure 1F) is connected to the Main Drive-Belt (Figure 1I) at the belts second end and the Main Drive-Belt (Figure 1I) is further extending over the variable radius of the gear axle (Figure 1F),***
∘ **characterized by,** upon activation of the pedal-arm (Figure 1B), the transmission system is configured to push the pushrod (Figure 1C) and the pushrod pulley (Figure 1D) towards the Main Drive-Belt (Figure 1I), in an oscillating movement, as to drive the Main Drive-Belt (Figure 11) over the top-fix plate (Figure 1E) and thereby pulling the Main Drive-Belt (Figure 11) at its second end so that the variable radius gear axle (Figure 1F) will be rotating.

2. ***The Mechanical Transmission System according to claim 1 comprises a variable radius gear-axle***
***(Figure 1F) which enable increasing or decreasing the gear ratio in conjunction with the movement of the pushrod (Figure 1C) through its shape creating a variable radius when rotating (Figure 4).***

3. ***The Mechanical Transmission System according to claims 1 and 2 comprises a control mechanism by the employment of a top-fix plate (Figure 1E) which allows the gear-ratio to increase or decrease depending on the movement of the pushrod (Figure 1C), transforming the motion into a rotating movement of the variable radius gear-axle (Figure 5).***

4. ***The Mechanical Transmission System according to claim 1, 2 and 3 comprises a free-wheel mechanism (Figure 1N) allowing the drive belt to engage with the rotational movements also when the mechanism is already in motion without putting the rotation to a stop creating a lasting transformation of the oscillating force.***

5. ***The Mechanical Transmission System according to claim 1 comprises a screwless fixture feature (Figure 7P) enabling the mounting of the fixture by plugging it in or out, without the use of any tools.***

6. ***The mechanical Transmission system according to claim 1, comprising a variable radius gear axle with a separate radius-adjustment design feature (Figure 8Q), rotatably adjustable, pivoting around a mounting hole (Figure 8R) and guided by an adjustment-slot (Figure 8S). The radius-adjustment (Figure 8Q) feature, allowing for a gear ratio adjustment, to enable an increase or decrease of the pre-set radius.***

7. ***A compact Mechanical Transmission system, according to claim 1, comprising an adjustable top-fix plate (Figure 10 and 11T) design feature with two mounting slots (Figure 10 and 11U), to allow for a fixed adjustability of the adjustable top-fix plate (Figure 10 and 11T),***
***enabling a further adjustment of the Main Drive Belt's (Figure 1L) extension over the adjustable top-fix plate (Figure 10 and 11T).***

## Amended claims

### Amended claims in accordance with Rule 137(2) EPC.

1. • A mechanical transmission system for converting oscillating input motion into rotational output comprising:
- a pedal-arm, pivotally connected at a first end to a mounting structure via a pedal-arm pivot point, and at a second end, pivotally connected to an attachable pedal.
- a pushrod, having a first end connected to the underside of the *pedal-arm* and a second end connected to a pushrod-pulley.
- an adjustable belt-control plate affixed to the mounting structure by means of fasteners inserted through elongated mounting-slots, allowing positional adjustment of the plate relative to the mounting structure;
- a main drive-belt having a first end fixed to the adjustable belt-control plate, extending over said plate and around the pushrod and pushrod-pulley toward a variable radius gear-axle, to which the second end of the main drive-belt is affixed. The pushrod and pushrod-pulley actively displaces the main drive-belt, modifying its position, during operation;
- the main drive-belt being mounted at both ends by a tool-free fixture, allowing insertion and removal without the use of tools, while maintaining mechanical stability during operation;
- the variable radius gear-axle, incorporating a radius-adjustment segment, pivotally mounted via a mounting hole and guided by an arcuate adjustment-slot, wherein a fastener inserted through the slot secures the segment in a selected position;
- the adjustable belt-control plate in conjunction with the radius-adjustment segment, enable modification of belt curvature and tension, thereby allowing pre-adjustment of gear ratio and torque transmission during oscillating actuation of the *pedal-arm*;
- wherein the pushrod and pushrod-pulley actively displace the drive-belt path during the forward stroke, enabling dynamic variation of the belt's engagement geometry;
- the main drive-belt is mounted using tool-free fixtures at both ends, comprising integrated belt-mounting cavities, allowing secure, tool-less installation and removal while maintaining mechanical stability;
- the radius-adjustment segment is pivotally attached via a mounting hole and guided by an arcuate adjustment-slot, enabling the user to vary the effective radius of the variable radius gear-axle by rotating and securing the segment to preset positions;
- a freewheel mechanism which is coupled to the variable radius gear-axle and configured to convert the oscillating input motion of the *pedal-arm* into a continuous, unidirectional rotational output.
- the combined action of these components forms a modular, userconfigurable gearing system wherein the gear ratio, torque curve, and inputoutput response profile may be tuned prior to operation to accommodate terrain, physical capability, or device-specific constraints;
- and wherein said configuration provides advantages including stepless transmission adjustment, compact integration, and high mechanical efficiency. This efficiency is the result of a single downstroke which achieves a 360 degree turn of the variable radius gear-axle, which is further amplified by the synergistic cooperation of the adjustable belt-control plate and the variable radius gear-axle, (including the radius-adjustment segment). Together, they augment the travel path of the pushrod-pulley along the main drive-belt. This is achieved without reliance on electronics, hydraulics, or symmetric pulling mechanisms.

2. The mechanical transmission system according to claim 1,
- wherein the adjustable belt-control plate is fixable in selected positions along the mounting-slots by means of mechanical fasteners or clamps, enabling pre-setting of belt curvature, contributing to control of the gear ratio and;
- wherein the main drive-belt is secured at both ends by a tool-free fixture comprising interlocking elements configured to allow insertion and removal without the use of tools, while maintaining mechanical stability during use.

3. The mechanical transmission system according to claim 1 or 2, wherein the radius-adjustment segment, integrated with the variable radius gear-axle, comprises:
- a pivot point, mounting hole and
- an arcuate adjustment-slot or detented guide path, configurable to allow discrete, preset positions for gear ratio adjustment.

4. The mechanical transmission system according to any of the preceding claims, further comprising a return-spring which is attached to the *pedal-arm* at one end and to a return-belt at the other end. This is further connected to a return-disc- (i.e. anchor for return-belt). These are configured to bias the main drive-belt back onto the variable radius gear-axle on the return-stroke of the *pedal-arm,* thus resetting it to its start position.

5. The mechanical transmission system according to any of the preceding claims, further comprising a unidirectional clutch-bearing, upon which a drive-sprocket is mounted. This is connected to a wheel-axle by a wheel-axle drive-belt.
These comprise the critical components of a freewheel mechanism. This is coupled to the variable radius gear-axle and configured to convert the oscillating input motion of the *pedal-arm* into a continuous, unidirectional rotational output.

6. The mechanical transmission system according to any of the preceding claims, wherein the variable radius gear-axle comprises a cam-shaped or eccentric profile, incorporating the radius-adjustment segment such that the main drive-belt engages at different radii during oscillation, thereby enabling the user to influence power output by regulating the preset range of input forces.
